(19) **Europäisches Patentamt / European Patent Office / Office européen des brevets**

(11) **EP 3 754 326 B1**

(12) **FASCICULE DE BREVET EUROPEEN**

(45) Date de publication et mention de la délivrance du brevet:
**02.03.2022 Bulletin 2022/09**

(21) Numéro de dépôt: **20181228.6**

(22) Date de dépôt: **19.06.2020**

(51) Classification Internationale des Brevets (IPC):
**G01N 21/45** (2006.01)    **G01N 21/77** (2006.01)

(52) Classification Coopérative des Brevets (CPC):
**G01N 21/45; G01N 21/7703;** G01N 2021/458; G01N 2021/7779

(54) **CIRCUIT OPTIQUE INTÉGRÉ À BRAS DE RÉFÉRENCE ENCAPSULÉ**

INTEGRIERTER OPTISCHER SCHALTKREIS MIT EINGEKAPSELTEM REFERENZARM

INTEGRATED OPTICAL CIRCUIT WITH ENCAPSULATED REFERENCE ARM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2019 FR 1906736**

(43) Date de publication de la demande:
**23.12.2020 Bulletin 2020/52**

(73) Titulaires:
- **Commissariat à l'Energie Atomique et aux Energies Alternatives**
  **75015 Paris (FR)**
- **Aryballe Technologies**
  **38040 Grenoble Cedex 09 (FR)**

(72) Inventeurs:
- **LAPLATINE, Loïc**
  **38054 GRENOBLE CEDEX 09 (FR)**
- **DUPOY, Mathieu**
  **38054 GRENOBLE CEDEX 09 (FR)**
- **FOURNIER, Maryse**
  **38054 GRENOBLE CEDEX 09 (FR)**
- **LABEYE, Pierre**
  **38054 GRENOBLE CEDEX 09 (FR)**
- **LIVACHE, Thierry**
  **38560 JARRIE (FR)**
- **HERRIER, Cyril**
  **38600 FONTAINE (FR)**

(74) Mandataire: **Marks & Clerk France**
**Immeuble "Visium"**
**22, avenue Aristide Briand**
**94117 Arcueil Cedex (FR)**

(56) Documents cités:
**US-A- 4 940 328**

- **MELNIK EVA ET AL: "Local functionalization of CMOS-compatible Si3N4Mach-Zehnder interferometers with printable functional polymers", SENSORS AND ACTUATORS B: CHEMICAL, ELSEVIER BV, NL, vol. 236, 28 mai 2016 (2016-05-28), pages 1061-1068, XP029700052, ISSN: 0925-4005, DOI: 10.1016/J.SNB.2016.05.121**
- **MUELLNER PAUL ET AL: "CMOS-compatible Si3N4Waveguides for Optical Biosensing", PROCEDIA ENGINEERING, vol. 120, 2015, pages 578-581, XP029268472, ISSN: 1877-7058, DOI: 10.1016/J.PROENG.2015.08.728**
- **ADAM DENSMORE ET AL: "Arrays of SOI photonic wire biosensors for label-free molecular detection", SPIE - INTERNATIONAL SOCIETY FOR OPTICAL ENGINEERING. PROCEEDINGS, vol. 7606, 11 février 2010 (2010-02-11), page 76060C, XP055672381, US ISSN: 0277-786X, DOI: 10.1117/12.842027**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique** :

La présente invention concerne le domaine de l'interférométrie optique et plus particulièrement des capteurs interférométriques pour mesure de gaz et mesure biologique.

**Technique antérieure :**

Dans les domaines de la biologie, de la médecine, du contrôle de la qualité de l'air , de la détection de gaz ou plus généralement le contrôle de qualité de matières odorantes ou pas, il existe un fort besoin de techniques rapides, économiques et précises pour la détection de composés en milieux aqueux ou gazeux.

Des capteurs chimiques et des biocapteurs permettent d'obtenir une détection rapide et un contrôle en temps réel de l'interaction entre l'échantillon ou les composés à détecter et le senseur. De tels capteurs utilisent une couche de détection chimique ou biomoléculaire afin de reconnaître un composé à détecter en se liant à ce dernier. Cette couche peut par exemple comprendre des molécules comme des anticorps, des enzymes, des hormones, de l'ADN, des récepteurs neurotransmetteurs, etc...

Ce type de capteurs n'est généralement pas réutilisable car l'étape de liage entre le composé à détecter et la couche de détection n'est en général pas réversible. Ces capteurs sont donc utilisés une fois puis jetés. Cependant, d'autres types de capteurs, comme les langues ou nez électronique, peuvent être réutilisés un grand nombre de fois.

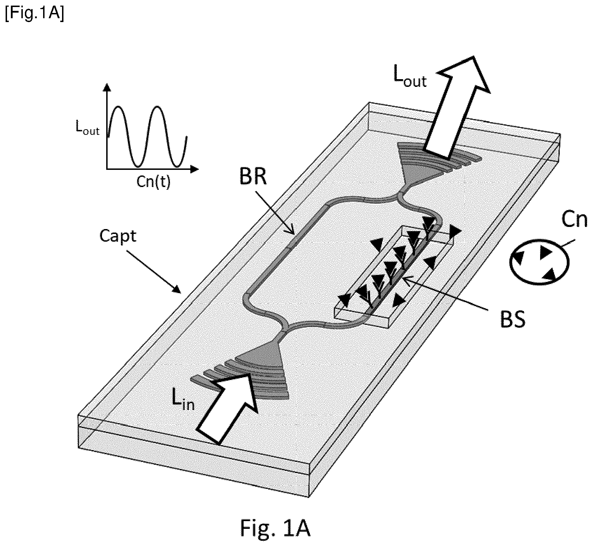

Les capteurs en optique intégré fournissent une voie attrayante pour ces capteurs chimiques. En effet, les techniques de fabrication de guides d'onde intégrés sur des puces optiques par photolithographie et microfabrication permettent une production en masse, à bas coût et répétable de capteur en optique intégré. La plupart de ces capteurs en optique intégré sont des interféromètres de type Mach-Zehnder (ou MZI pour Mach-Zehnder interferometer en anglais). La figure 1A illustre schématiquement le principe d'un tel interféromètre. Un faisceau incident $L_{in}$ est couplé vers un capteur interférométrique Capt et dirigé, par un séparateur en Y, vers deux guides d'onde : un bras de référence et un bras sensible. L'intensité $I_t$ du faisceau transmis $L_{out}$ vaut :

[Math 1]

$$I_t(t) = I_s(t) + I_r(t) + 2\sqrt{I_s I_t(t)} \cos(\Delta\phi_s(t))$$

avec Is et Ir qui sont les intensités transmises par le bras sensible et le bras de référence, respectivement. Le déphasage est engendré par une différence de marche optique entre les deux bras qui peut s'écrire sous la forme :

[Math2]

$$\Delta\phi_s(t) = (2\pi/\lambda) \times [\, L_s \times (n_{eff\text{-}s} + \Delta n_{eff\text{-}s}(t)) - L_r \times n_{eff\text{-}r} \,]$$

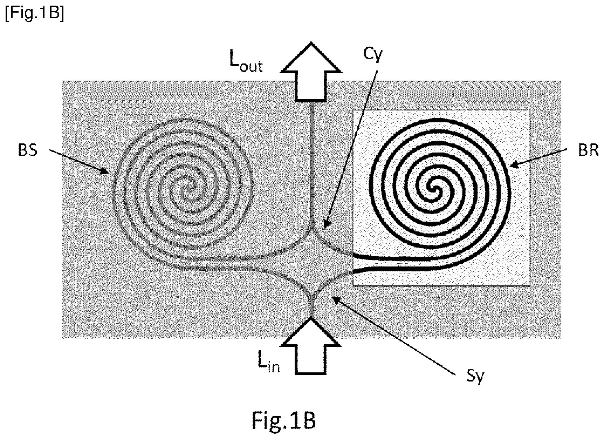

où $L_s$ et $L_r$ sont les longueurs physiques du bras sensible et du bras de référence, respectivement, et où $n_{eff\text{-}s}$ et $n_{eff\text{-}r}$ sont les indices optiques effectifs du bras sensible et du bras de référence, respectivement. Dans le cas le plus simple, où les deux bras ont la même longueur, le même indice effectif initial, et où les intensités transmises sont les mêmes, alors $I_t$ est proportionnelle à $\cos[(2\pi/\lambda) \times L \times \Delta n_{eff\text{-}s}(t)]$. L'intensité varie donc si l'indice optique effectif du guide sensible varie, et la sensibilité du MZI est proportionnelle à la longueur du bras sensible. C'est pourquoi la plupart des MZI utilisent des guides d'onde en spirale comme bras de référence et bras sensible, comme l'illustre la figure 1B. Comparativement aux guides d'onde droits, les guides d'onde en spirale permettent d'avoir des bras d'une longueur plus importante et donc d'obtenir une sensibilité élevée tout en réduisant leur encombrement. La figure 1B illustre par ailleurs un séparateur en Y Sy permettant de diriger le rayonnement $L_{in}$ vers le bras sensible et le bras de référence et un combineur en Y Cy permettant d'obtenir un rayonnement $L_{out}$ issu du couplage des rayonnements guidés par le bras sensible et par le bras de référence.

Par exemple, il est connu de réaliser des capteurs en optique intégré interférométrique de type Mach-Zehnder pour réaliser des mesures de température de l'air (US 4 515 430). Il est également connu de réaliser des capteurs en optique intégré interférométrique de type Mach-Zehnder avec un bras de référence couvert d'un superstrat et un bras sensible exposé à un milieu ambiant liquide, ledit capteur permettant de mesurer l'indice de réfraction du milieu (EP 340 577).

La figure 1A illustre un exemple d'un capteur Capt MZI en optique intégré. En général, ces capteurs MZI en photonique intégrée ont leur bras de référence (BR) couvert par une couche supérieure dite superstrat ou « cladding » (de l'oxyde ou de la résine), alors que le bras sensible (BS) est exposé au milieu où a lieu la détection. L'indice de réfraction du superstrat n'étant en général pas similaire à celui du milieu auquel est exposé le bras sensible, le rayonnement guidé dans le bras sensible ne subit pas les mêmes pertes par propagation que le rayonnement guidé dans le bras sensible. Cette différence d'indice, si elle n'est pas compensée, va induire un bruit de mesure. Ce type d'interféromètre est en général appelé « non symétrique », car les deux bras de l'interféromètre ne possèdent pas la même longueur optique (indice de groupe multiplié par la longueur du bas).

Une couche de fonctionnalisation déposée au-dessus du bras sensible et recouvrant au moins partiellement ce dernier permet une adsorption de composés spécifiques (voir figure 1A) à la couche de fonctionnalisation. Notons que le guide d'onde n'est sensible qu'aux variations d'indices ayant lieu à des distances inférieures à quelques centaines de nm, c'est-à-dire dans la zone où le champ est évanescent, et pénètre légèrement en dehors du guide lui-même dans le milieu ambiant. De ce fait, si des molécules viennent s'adsorber à la surface du guide, et que leur indice optique est différent de celui du milieu ambiant, elles vont induire un changement d'indice, et donc un déphasage et une variation d'intensité mesurable. On peut montrer que la quantité de molécules adsorbées est en première approximation proportionnelle à leur concentration (Cn) dans le milieu ambiant. Ainsi, comme le montre la figure 1A, l'intensité en sortie du MZI varie sinusoïdalement avec la concentration de molécules.

Les deux guides d'onde bras de référence, bras sensible, ont donc des propriétés optiques différentes, notamment leur indice effectif $n_{eff}$, leur susceptibilité à la température $\partial n_{eff}/\partial T$ et leur indice de groupe $n_g$. Même si les guides sensibles et de références ont les mêmes dimensions physiques (largeur, hauteur, longueur, courbure...), le MZI ne sera ni athermique, ni large-bande, ce qui signifie que les variations de température et/ou de longueur d'onde vont induire un signal parasite (bruit de mesure) non corrélé aux variations d'indice que l'on cherche à mesurer. Ce bruit de mesure sera d'autant plus fort que le MZI sera long.

On peut cependant rendre le MZI athermique si le ratio de longueur entre le bras sensible et de référence est tel que :

$$[Math\ 3]$$

$$\frac{\partial n_1}{\partial T} \cdot L_1 - \frac{\partial n_2}{\partial T} \cdot L_2 = 0 \quad \Rightarrow \quad \frac{L_2}{L_1} = \frac{\frac{\partial n_{eff,1}}{\partial T}}{\frac{\partial n_{eff,2}}{\partial T}}$$

avec indice 1 pour le bras de référence et indice 2 pour le bras sensible.

On peut aussi le rendre large-bande si le ratio de longueur est tel que son intervalle spectral libre (« FSR » pour Free Spectral Range en anglais, qui représente la bande passante du dispositif interférométrique) devient infini :

$$[Math\ 4]$$

$$FSR = \frac{\lambda^2}{n_{g,1} \cdot L_1 - n_{g,2} \cdot L_2} \rightarrow +\infty \quad \Rightarrow \quad n_{g,1} \cdot L_1 - n_{g,2} \cdot L_2 = 0 \quad \Rightarrow \quad \frac{L_2}{L_1} = \frac{n_{g,1}}{n_{g,2}}$$

Puisque $\partial n_{eff}/\partial T$ et $n_g$ sont des fonctions de la largeur ($w_1$, $w_2$) et hauteur (H1, H2) du guide, et de la longueur d'onde, le MZI peut être rendu à la fois athermique et large-bande, autour une longueur d'onde et pour une hauteur de guide nominale donnée, pour un couple de largeurs $\{w_1, w_2\}$ et de longueurs ($L_1$, $L_2$) qui satisfassent ces deux équations.

L'équation [Math 2] implique que plus le bras sensible du MZI est long, plus la sensibilité sera importante. Cependant, plus le bras sensible du MZI est long plus la variation dans la fabrication des guides d'onde (hauteur et largeur) seront importantes. Cette variation va donc impacter les conditions à respecter définies dans les équations [Math 3] et [Math 4] pour que le MZI soit athermique et large bande. Il existe donc un compromis entre la sensibilité du MZI en variation d'indice que l'on souhaite la plus grande possible et qui est proportionnelle à la longueur du bras sensible, et sur ses performances, que l'on veut les plus stables possible d'un MZI à l'autre.

Le document Melnik, Eva, et al. "Local functionalization of CMOS-compatible Si3N4 Mach-Zehnder interferometers with printable functional polymers." Sensors and Actuators B: Chemical236 (2016): 1061-1068 décrit plusieurs configurations d'interféromètres Mach Zender en circuit optique intégré, dont un interféromètre similaire à celui illustré en figure 1A de la présente demande (voir figure 1E).

Il est connu de réaliser des capteurs MZI symétriques, c'est-à-dire où le bras de référence, tout comme le bras sensible, n'est pas recouvert d'un superstrat, les bras possédants le même indice effectif, la même longueur, même hauteur et la même largeur. Dans ce cas, le bras de référence est « passivé » chimiquement (A. B. González-Guerrero, S. Dante, D. Duval, J. Osmond, and L. M. Lechuga, "Advanced photonic biosensors for point-of-care diagnostics," Procedia Eng., vol. 25, pp. 71-75, 2011.). Ainsi, les deux bras seront soumis exactement au même milieu ambiant. Cette structure permet de compenser des variations d'indice globales et des phénomènes d'adsorptions non-spécifiques correspondant à des molécules dans le milieu ambiant qui ne sont pas celles que l'on cherche à détecter et qui peuvent s'adsorber au bras sensible et au bras de référence. Cependant, la passivation n'est jamais parfaitement insensible à toutes les molécules cibles que l'on cherche à détecter. De plus, cette passivation évolue dans le temps, ce qui change la sensibilité du MZI et les signatures de détection/identification.

L'invention vise à pallier certains problèmes de l'art antérieur. A cet effet, un objet de l'invention est un circuit optique intégré symétrique comportant un bras de référence encapsulé dans un milieu de même nature que celui auquel est exposé le bras sensible lors de la détection.

**Résumé de l'invention :**

A cet effet, un objet de l'invention est un circuit optique intégré pour capteur interférométrique comportant :

- une couche inférieure dite substrat;
- un premier moyen de couplage adapté pour coupler un rayonnement lumineux incident au circuit optique intégré ;
- un séparateur directionnel relié au premier moyen de couplage et configuré pour séparer le rayonnement lumineux couplé par le premier moyen de couplage vers au moins un couple de guides d'onde compris dans le circuit optique intégré, chaque couple de guides d'onde comportant :
- un premier guide d'onde dit bras sensible dans lequel se propage une première portion du rayonnement lumineux, ledit bras sensible étant exposé à un premier milieu ambiant et à au moins un composé à détecter induisant une modification de l'indice de réfraction local perçu par la partie évanescente du champ électromagnétique de la première portion du rayonnement lumineux, et
- un deuxième guide d'onde dit bras de référence dans lequel se propage une deuxième portion du rayonnement lumineux,
- une couche d'encapsulation encapsulant le bras de référence, ladite couche d'encapsulation étant imperméable au(x) composé(s) à détecter, de manière à ce que le bras de référence soit exposé uniquement à un deuxième milieu ambiant, sensiblement de même nature que le premier milieu ambiant et dépourvu dudit composé à détecter
- un combineur directionnel combinant la première portion du rayonnement lumineux issue dudit bras de référence, dite première portion transmise, et la deuxième portion du rayonnement lumineux issue dudit bras sensible, dite deuxième portion transmise, pour former un rayonnement transmis ;
- un deuxième moyen de couplage adapté pour coupler ledit rayonnement transmis vers un milieu extérieur au circuit optique intégré;
- une couche supérieure dite superstrat recouvrant au moins le premier et le deuxième moyen de couplage, le séparateur directionnel et le combineur directionnel et ne recouvrant pas le bras sensible et le bras de référence, ladite couche d'encapsulation étant déposée au-dessus du superstrat.

Selon des modes particuliers de l'invention :

- le bras sensible et le bras de référence sont des guides d'onde en spirale ;
- le circuit optique intégré comprend une couche dite de fonctionnalisation recouvrant au moins partiellement le bras sensible et adaptée pour adsorber un des composés à détecter ;
- le circuit optique intégré comprend une couche dite de compensation recouvrant au moins partiellement le bras de référence, une épaisseur de la couche de compensation étant égale ou supérieur à celle de la couche de fonctionnalisation avant adsorption dudit composé à détecter ;
- la couche d'encapsulation est poreuse au premier milieu ambiant de manière à permettre une régulation du degré hydrométrique ou de la pression osmotique du deuxième milieu ambiant par rapport au premier milieu ambiant ;
- lequel la couche d'encapsulation est en verre, ou silicium, polymère ou métal ;
- la couche d'encapsulation est une membrane déformable ;
- un ensemble formé par ledit séparateur directionnel, ledit bras de référence, ladite couche d'encapsulation, ledit bras sensible et ledit combineur directionnel est appelé ensemble interférométrique , ledit circuit optique intégré comprenant en outre au moins un séparateur directionnel additionnel configuré pour séparer le rayonnement lumineux couplé par le premier moyen de couplage vers une pluralité d'ensembles interférométriques, et comprenant une pluralité de deuxièmes moyens de couplage, chacun adapté pour coupler le rayonnement transmis par un ensemble interférométrique différent vers un milieu extérieur au circuit optique intégré ;
- le bras sensible de chaque ensemble interférométrique comprend une couche dite de fonctionnalisation recouvrant au moins partiellement le bras sensible et adaptée pour adsorber un des composés à détecter, chaque couche de fonctionnalisation étant adaptée pour adsorber un composé à détecter différent de ceux adsorbés par les autres couches de fonctionnalisation recouvrant le bras sensible des autres d'ensembles interférométriques ;

- le bras de référence de chaque ensemble interférométrique est encapsulé individuellement ;
- l'épaisseur de la couche d'encapsulation individuelle est inférieure à 500 μm ;
- les bras de référence des ensembles interférométriques sont encapsulés collectivement, de manière à former une couche d'encapsulation uniforme et sans discontinuité ;
- l'épaisseur de la couche d'encapsulation individuelle est comprise entre 5 microns et 2000 μm ;

Un autre objet de l'invention est un capteur comprenant :

- une source laser configurée pour émettre un rayonnement lumineux incident;
- un circuit optique intégré selon selon l'invention ;
- un système de détection optique adapté pour détecter un rayonnement lumineux issu du deuxième moyen de couplage et générer un signal représentatif de l'évolution au cours du temps de l'intensité lumineuse détectée;
- une unité de traitement dudit signal, adaptée pour déterminer, à partir de l'intensité détectée, l'évolution au cours du temps du déphasage entre la première portion transmise et la deuxième portion transmise.

## Brève description des figures :

D'autres caractéristiques, détails et avantages de l'invention ressortiront à la lecture de la description faite en référence aux dessins annexés donnés à titre d'exemple et qui représentent, respectivement :

[Fig.1 A] une vue schématique d'un capteur interférométrique Mach-Zehnder en optique intégré de l'art antérieur.
Fig.1B] une vue schématique d'un capteur interférométrique Mach-Zehnder en optique intégré de l'art antérieur avec un bras sensible et un bras de référence en spirale.
[Fig.2A] et [Fig.2B], respectivement une vue de perspective et de profil d'un circuit optique intégré de l'invention.
[Fig.3A] et [Fig.3B], le calcul du FSR en fonction de la longueur d'onde pour des variations de largeur et hauteur de guide, pour, respectivement, un capteur interférométrique symétrique comprenant le circuit optique intégré selon l'invention et pour le capteur interférométrique Mach-Zehnder non symétrique de la figure 1.
[Fig.4A] une vue schématique de profil d'un circuit optique intégré selon un mode de réalisation de l'invention.
[Fig.4B] une vue schématique de profil d'un circuit optique intégré selon un mode de réalisation de l'invention.
[Fig.5] une vue schématique de dessus d'un circuit optique intégré selon une première variante de l'invention.
[Fig.6] une vue schématique de dessus d'un circuit optique intégré selon une deuxième variante de l'invention.

Les références aux figures, quand elles sont identiques, correspondent aux mêmes éléments.
Dans les figures, sauf contre-indication, les éléments ne sont pas à l'échelle et les axes (x,y,z) forment un repère orthonormé direct.

## Description détaillée :

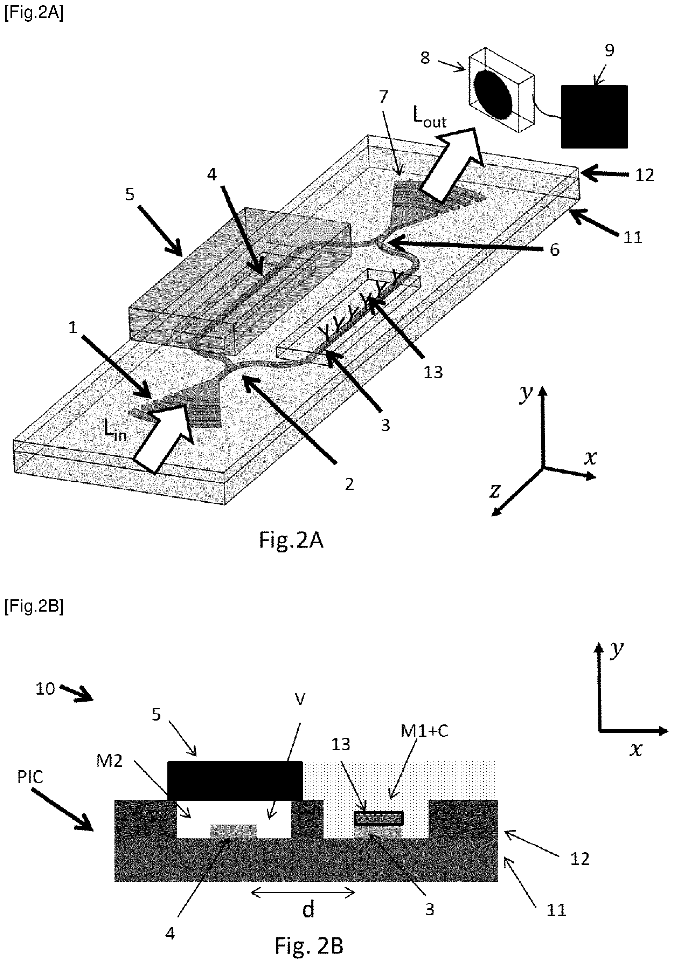

La figure 2A et la figure 2B représentent respectivement une vue en perspective et en coupe d'un circuit optique intégré PIC selon l'invention pour un capteur interférométrique Mach-Zehnder. Le circuit optique intégré PIC comprend une couche inférieure dite substrat 11 au-dessus duquel sont situés tous les éléments du circuit optique intégré. De plus, le circuit optique intégré comprend une couche supérieure dite superstrat 12 recouvrant tous les éléments, sauf lorsque cela est spécifié.

Le circuit optique intégré comprend un premier moyen de couplage 1 adapté pour coupler un rayonnement lumineux $L_{in}$ incident émis par une source laser - non représentée dans les figure 2A et 2B- et se propageant dans l'espace libre ou dans une fibre optique à un guide d'onde du circuit optique intégré PIC. Selon un mode de réalisation les guides d'onde du circuit optique intégré fonctionnent en polarisation TM. Alternativement, les guides d'onde du circuit optique intégré fonctionnent en polarisation TE.

Selon un mode de réalisation de l'invention ce premier moyen de couplage 1 est un réseau de diffraction. Alternativement, dans un autre mode de réalisation, ce premier moyen de couplage est un coupleur direct (axial) d'une fibre à un guide droit (« edge coupling » ou « butt coupling » en anglais). Le réseau de diffraction permet de faciliter l'alignement avec une source émettant le rayonnement lumineux $L_{in}$.

Le rayonnement lumineux couplé par le premier moyen de couplage 1 vers un guide d'onde du circuit optique intégré est dirigé vers un séparateur directionnel 2 relié au premier moyen de couplage 1. Selon un mode de réalisation de l'invention, le séparateur est un séparateur en Y.

Le séparateur est configuré pour séparer le rayonnement lumineux $L_{in}$ couplé par le premier moyen de couplage

1 vers au moins un premier couple de guides d'onde, formé d'un premier guide d'onde dit bras sensible 3 dans lequel se propage une première portion du rayonnement lumineux et d'un deuxième guide d'onde dit bras de référence 4 dans lequel se propage une deuxième portion du rayonnement lumineux.

Selon un mode de réalisation de l'invention, le bras de référence et le bras sensible sont des guides d'onde surélevés ou « ridge » en anglais par rapport au substrat 11.

Alternativement, dans un autre mode de réalisation, le bras de référence et le bras sensible sont des guides d'ondes enterrés ou « buried » dans le substrat 11. Dans ce mode de réalisation, les guides d'onde ne sont donc pas situés au-dessus du substrat 11.

Alternativement, dans un autre mode de réalisation, le bras de référence et le bras sensible sont des guides d'ondes de type « rib ».

Selon un mode de réalisation de l'invention, le bras sensible et le bras de référence sont des guides d'onde en spirale. Cela permet d'avoir des bras d'une longueur plus importante et donc d'obtenir une sensibilité élevée (cf. équation [Math 2]), tout en réduisant leur encombrement. Alternativement, le bras sensible et le bras de référence sont des guides d'onde droits.

Le bras sensible et le bras de référence ne sont pas recouverts par le superstrat 12 et possèdent la même longueur, la même largeur, la même hauteur et possèdent le même indice effectif.

Le bras sensible est exposé à un premier milieu ambiant donné M1 et à au moins un composé à détecter C pouvant s'adsorber au bras sensible de manière à induire une modification de l'indice de réfraction local perçu par la partie évanescente du champ électromagnétique de la première portion du rayonnement lumineux et provoquant ainsi une modification de l'indice effectif du bras sensible $\Delta n_{eff,s}$ (voir Math 2).

Le bras de référence est encapsulé à l'aide d'une couche d'encapsulation 5 imperméable au(x) composé(s) à détecter C présent dans le premier milieu ambiant, de manière à être exposé uniquement à un deuxième milieu ambiant M2, de même nature ou sensiblement de même nature que le premier milieu ambiant M1, mais dépourvu du composé à détecter C. Par milieu de même nature, on entend ici que lorsque le milieu M1 est de l'air, le milieu M2 est de l'air ; lorsque le milieu M1 est de l'eau, le milieu M2 est de l'eau ; lorsque le milieu M1 est un fluide particulier, le milieu M2 est le même fluide, etc... Concrètement, la couche d'encapsulation 5 est déposée au-dessus du superstrat 12 en scellant un volume V, de manière à contrôler l'environnement auquel est exposé le bras de référence 4 et à isoler ce dernier des composés à détecter C.

L'adsorption du composé à détecter à la surface du guide d'onde, avec un indice optique différent de celui du milieu ambiant, induit un changement d'indice perçu par la partie évanescente du champ TM guidé dans le bras sensible. Ce changement d'indice se traduit par un déphasage entre la première portion du rayonnement lumineux et la deuxième portion du rayonnement lumineux. Comme mentionné précédemment, on peut montrer que la quantité de molécules adsorbées est en première approximation proportionnelle à leur concentration dans le milieu ambiant M1.

Selon un mode préféré de l'invention, le circuit optique intégré de l'invention comprend une couche dite de fonctionnalisation 13, optionnelle, recouvrant le bras sensible et adaptée pour adsorber un des composés à détecter à la surface de cette couche. Par surface de la couche, on entend ici, la face de la couche en contact avec le milieu ambiant M1 et le composé à détecter Cette couche permet une adsorption plus efficace du composé à détecter à la surface de la couche de fonctionnalisation.

Alternativement, selon un autre mode de réalisation, le capteur interférométrique ne comprend pas de couche de fonctionnalisation 13.

Le circuit optique intégré PIC comprend en outre un combineur ou coupleur de guide d'onde directionnel 6 combinant la première portion du rayonnement lumineux issue du bras de référence, dite première portion transmise, et la deuxième portion du rayonnement lumineux issue dudit bras sensible, dite deuxième portion transmise pour former un rayonnement transmis. Le rayonnement transmis est dirigé vers un deuxième moyen de couplage 7 adapté pour coupler le rayonnement transmis vers un milieu extérieur au circuit optique intégré. Selon un mode de réalisation de l'invention, le combineur 6 est un combineur en Y.

Selon un mode de réalisation de l'invention ce deuxième moyen de couplage est un réseau de diffraction. Alternativement, dans un autre mode de réalisation, ce deuxième moyen de couplage est un coupleur direct (axial) d'une fibre à un guide droit (« edge coupling » ou « butt coupling » en anglais).

Par la suite, on appelle ensemble interférométrique, l'ensemble formé par ledit séparateur directionnel 2, ledit bras de référence 4, ladite couche d'encapsulation 5, ledit bras sensible 3 et ledit combineur directionnel 6.

Le circuit optique intégré PIC selon l'invention est destiné à être associé à la source laser diode laser ou SLED (non représentée),à un système de détection optique 8 et à une unité de traitement 9 de manière à former un capteur interférométrique 10. Le système de détection optique est adapté pour détecter le rayonnement lumineux issu du deuxième moyen de couplage $L_{out}$ et se propageant dans l'espace libre ou dans une fibre optique. Le système de détection optique est adapté pour générer un signal S représentatif de l'évolution au cours du temps de l'intensité lumineuse détectée $I_t(t)$ résultant de l'interférence entre la première portion transmise et la deuxième portion transmise. Selon un mode de réalisation de l'invention, ce système de détection optique est une photodiode.

Le système de détection optique 8 est couplé à une unité de traitement du signal généré par le système de détection 9 adapté pour déterminer, à partir de l'intensité détectée $I_t(t)$, l'évolution au cours du temps du déphasage $\Delta\phi(t)$ entre la première portion transmise et la deuxième portion transmise. Ce déphasage $\Delta\phi(t)$ permet de déterminer l'évolution de la concentration du composé à détecter au cours du temps, dans le milieu ambiant M1. En effet, la quantité de molécules C adsorbées au bras sensible -et donc la modification d'indice $\Delta n_{eff-s}$ que cette adsorption induit- est environ proportionnelle à leur concentration dans le milieu ambiant M1. Cette modification d'indice de réfraction est perçue par la partie évanescente du champ électromagnétique de la première portion du rayonnement lumineux lors de sa propagation dans le bras sensible et va donc entrainer un déphasage $\Delta\phi(t)$ entre la première portion transmise et la deuxième portion transmise. Ainsi, l'intensité détectée $I_t(t)$ varie sinusoïdalement avec la concentration du composé à détecter.

Le bras de référence et le bras sensible du circuit intégré selon l'invention étant exposés au même milieu ambiant, les pertes par propagation dans chaque bras sont identiques. Cela permet de maximiser le contraste de l'interférence entre la première portion transmise et la deuxième portion transmise. De plus, le fait que les deux bras soient recouverts par des milieux ambiants de même nature -donc d'indices de réfractions très proche- implique que le capteur interférométrique 10 possède une conception intrinsèquement athermique et large bande, indépendamment de la valeur moyenne de la hauteur et de la largeur des guides d'onde bras sensible et bras de référence. Le circuit optique intégré PIC selon l'invention, dans le capteur interférométrique 10, permet une détection de composés à détecter aussi bien dans un gaz que dans un liquide.

Aussi, selon un mode de réalisation, les milieux ambiants M1 et M2 sont tous les deux de l'air ou un autre gaz porteur. Dans ce mode de réalisation, les composés à détecter C sont des molécules gazeuses ou des composés organiques volatiles.

Alternativement dans un autre mode de réalisation, les milieux ambiants M1 et M2 sont tous les deux un milieu aqueux. Dans cet autre mode de réalisation, les composés à détecter sont par exemple des biomolécules.

Il est important de noter que l'encapsulation du bras de référence implique que le milieu ambiant M1 en contact avec le bras de sensible peut subir des variations globales (pression, humidité par exemple) alors que le milieu ambiant M2 en contact avec le bras de référence ne subit aucune variation. Ainsi, ces variations du milieu ambiant M1 ne seront pas compensées par le capteur interférométrique et vont induire un signal parasite non corrélé aux variations d'indices diminuant ainsi la sensibilité de la mesure. Aussi, dans un mode de réalisation, la couche d'encapsulation peut être une membrane suffisamment fine et souple afin de permettre une déformation de cette membrane lors d'une variation de pression globale du milieu ambiant M1. La déformation de la couche d'encapsulation permet ainsi d'obtenir une égalisation de la pression du milieu ambiant M2 par rapport à la pression du milieu ambiant M1. Afin de pouvoir se déformer convenablement, la couche d'encapsulation peut être en polymère, résine, verre, silicium, métal et possède une épaisseur suffisamment fine pour pouvoir se déformer facilement sous l'effet d'un différentiel de pression, mais suffisamment épaisse pour ne pas rompre ou s'effondrer, typiquement de l'ordre de quelques dizaines de nanomètres à quelques micromètres.. Ce mode de réalisation est avantageux car une variation de la pression globale du milieu ambiant M1 entrainera une modification de son indice de réfraction, qui lorsqu'elle n'est pas compensée dans le milieu M2, va entrainer un déphasage entre le rayonnement guidé dans le bras sensible par rapport au rayonnement guidé dans le bras de référence produisant un bruit de mesure sur le déphasage mesuré par le capteur. Ainsi ce mode de réalisation permet de s'affranchir, au moins partiellement, de ce signal parasite produit par une variation de pression du milieu ambiant M1.

Dans un mode de réalisation, la couche d'encapsulation 5 est partiellement poreuse au premier milieu ambiant M1 de manière à permettre une régulation du degré hydrométrique (dans le cas où les milieux ambiants sont gazeux) ou de la pression osmotique (dans le cas où les milieux ambiants sont aqueux) du deuxième milieu ambiant par rapport au premier milieu ambiant. La porosité de la couche d'encapsulation permet ainsi d'obtenir dans certaines situations une égalisation du degré d'hydrométrie ou de la pression osmotique du milieu ambiant M2 par rapport au degré d'hydrométrie ou à la pression osmotique du milieu ambiant M1. De manière similaire à une variation de pression, une variation du degré d'hydrométrie ou de la présence d'un élément dans milieu ambiant M1 entrainera une modification de son indice de réfraction, qui lorsqu'elle n'est pas compensée dans le milieu M2, va entrainer un déphasage entre le rayonnement guidé dans le bras sensible par rapport au rayonnement guidé dans le bras de référence produisant un bruit de mesure sur le déphasage mesuré par le capteur. Ainsi ce mode de réalisation permet de s'affranchir, au moins partiellement, de ce signal parasite. Dans ce mode de réalisation, la couche d'encapsulation peut être en DuPont™ Nafion® ou autre membrane perméable à l'humidité et possède une épaisseur la plus fine possible, mais toutefois suffisante pour ne pas rompre ou s'effondrer sous l'action d'un différentiel de pression. Dans un mode de réalisation l'épaisseur de cette membrane est comprise entre quelques dizaines de nanomètres à quelques micromètres.

La couche d'encapsulation peut être déposée et collée au-dessus du superstrat par une méthode choisie parmi les suivantes : le collage anodique, le collage moléculaire, le collage par polymère adhésif et le collage eutectique.

Le collage anodique et le collage moléculaire ne nécessitent pas de colle et permettent d'obtenir une très forte résistance mécanique. Cependant, ces techniques sont complexes à implémenter car elles nécessitent des surfaces ultra-propres et ultra-lisses et des températures élevées (supérieures à 120°C) pouvant affecter certains types de fonctionnalisation du bras sensible. La montée en température impose donc des matériaux à coller ayant des coefficients d'expansion thermique similaires. De plus le collage anodique impose qu'une des deux faces soit en silicium et que l'autre soit en un verre qui contienne de l'oxyde de sodium.

Le collage eutectique possède une très forte résistance mécanique et est plus tolérant sur la planéité et la propreté des surfaces à coller que le collage anodique ou moléculaire. De plus, il permet d'obtenir une excellente herméticité. Il impose cependant qu'une des deux faces soit recouverte d'un métal (typiquement de l'or) et que l'autre soit recouverte de silicium afin que le silicium et le métal créent un alliage et nécessite des températures élevées (supérieures à 150°C) pouvant affecter certains types de fonctionnalisation.

Le collage adhésif est très tolérant sur la planéité et la propreté des surfaces à coller et peut être réalisé à température ambiante. Ce collage n'impose pas de restriction sur les coefficients d'expansion thermique et est sans effet sur la fonctionnalisation du bras sensible. Il permet donc de coller des matériaux très différents et possède une résistance mécanique satisfaisante. Cependant, il impose qu'une des deux faces soit recouverte d'un polymère réticulable et l'herméticité obtenue est moins bonne que pour les autres méthodes de collage.

Dans un mode de réalisation, afin de faciliter le collage de la couche d'encapsulation, une couche de silicium est déposée en dessous de la couche d'encapsulation et au-dessus du superstrat, la couche d'encapsulation étant alors collée à ladite couche de silicium.

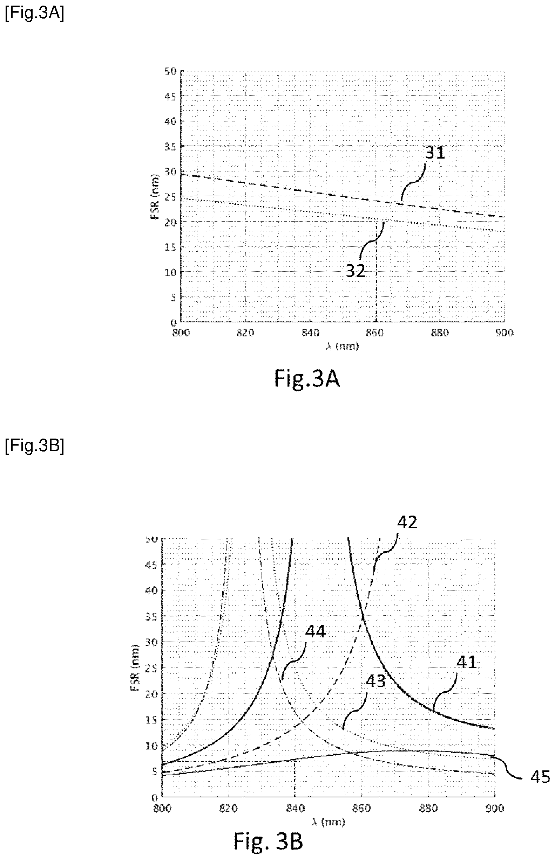

Les figures 3A et 3B illustrent respectivement le calcul du FSR en fonction de la longueur d'onde pour des variations de largeur et hauteur de guide, pour un capteur interférométrique symétrique comprenant le circuit optique intégré de l'invention (qu'on appellera MZI selon l'invention) et pour le capteur interférométrique Mach-Zehnder non symétrique de la figure 1 (qu'on appellera MZI non symétrique). Le FSR permet de représenter la bande passante du capteur interférométrique.

Dans l'exemple des figures 3A et 3B, donné de manière non limitatif, la polarisation du rayonnement guidé dans les guides d'onde des deux capteurs est une polarisation TM. De plus, afin d'être athermique et large bande, le MZI non symétrique possède des guides d'onde d'une hauteur (ou épaisseur) nominale de $H_{nominale}=H_{2,nominale}=H_{1,nominale}=250nm$ et une largeur nominale de $W_{2,nominale}=760nm$ et $W_{1,nominale}=420nm$, pour le bras sensible et le bras de référence respectivement. Le bras sensible possède une longueur $L_{sens}=10mm$.

Le MZI selon l'invention possède quant à lui des bras identiques, avec une hauteur et largeur nominale de $H_{nominale}=H_{2,nominale}=H_{1,nominale}=250$ nm et $W_{nominale}=W_{2,nominale}=W_{1,nominale}=760$ nm et d'une longueur de $L_{sens}=10mm$.

Comme mentionné précédemment, le capteur de l'invention est intrinsèquement athermique et large bande. Les seules variations qui peuvent perturber la symétrie du capteur de l'invention sont donc les variations de hauteur et largeur entre le guide sensible et le guide de référence, c'est-à-dire les variations locales au sein d'une même couche ou « wafer » (intra-wafer) à partir de laquelle le bras de référence et le bras sensible sont réalisés.

Or ces variations sont corrélées en distance. Dans l'invention, la distance séparant les deux bras est comprise entre 50 et 2000 μm. Cette distance de séparation selon la direction x est représentée sur la figure 2B par la distance d. Sur cette distance, les variations de hauteur et de largeur sont donc bien plus faibles que sur l'ensemble du wafer. On considère que, pour la hauteur et la largeur nominale du MZI selon l'invention, un guide d'onde est susceptible d'être affecté par des variations de hauteur et largeur de ±1 nm. Ces variations seront d'autant plus faibles que les deux bras seront proches l'un de l'autre. Aussi, dans la figure 3A, le FSR est calculé pour des variations de hauteur et largeur de ±1 nm affectant le bras de référence. Le FSR est infini si les deux bras sont parfaitement identiques, d'où l'omission de la courbe du FSR correspondant à la hauteur nominale $H_{nominale}$ et à la largeur nominale $W_{nominale}$. A λ=850 nm, le FSR pour $H_{nominal}$ et $W_{nominale}$ ±1 nm est typiquement 10 fois supérieur au FSR pour $H_{nominale}$±1 nm, d'où l'omission des FSR pour $H_{nominal}$ et $W_{nominale}$ ±1 nm sur la figure 3A. Cela implique par ailleurs que c'est la hauteur qui a le plus d'influence sur la symétrie du capteur interférométrique. Aussi, la figure 3A illustre uniquement les courbes 31 et 32 qui représentent le calcul du FSR pour $W_{nominale}$ et $H_{nominal}+1$ nm et pour $W_{nominale}$ et $H_{nominal}-1$ nm respectivement.

A l'inverse, dans le capteur interférométrique Mach-Zender non symétrique de la figure 1, ce sont les variations de largeur et de hauteur susceptibles d'arriver dans les deux guides d'un wafer à l'autre qui sont pertinentes. En effet, le MZI non symétrique de la figure 1 est athermique et large bande seulement pour une hauteur de guide donnée $H_{nominale}$ et pour un couple de largeurs $W_1$, $W_2$ du bras de référence et du bras sensible donné satisfaisant les deux équations [Math 3] et [Math 4]. C'est donc l'amplitude des variations en largeur et en hauteur d'un wafer à l'autre (inter-wafer) qui fixe les conditions dans lesquelles le capteur reste athermique et large bande car l'amplitude des variations inter-wafer est plus importante que l'amplitude des variations intra-wafer. On considère que pour la hauteur et la largeur nominale du MZI non symétrique, la hauteur et la largeur du guide d'onde peuvent varier de ±10 nm. Dans la figure 3B, les variations du FSR sont donc calculées pour des variations de hauteur et largeur de ±10 nm. Les courbes 41, 42, 43, 44, 45 représentent le calcul du FSR pour respectivement, $H_{nominale}$ et $W_{1,nominale}$; $H_{nominale}$ et $W_{1,nominale}$ +10nm; $H_{nominale}$ et $W_{1,nominale}$ - 10nm ; $H_{nominale}$ +10nm et $W_{1,nominale}$ et $H_{nominale}$ -10nm et $W_{1,nominale}$.

Prenons l'exemple d'une source laser émettant un rayonnement $L_{in}$ à une longueur d'onde comprise entre 840 et 860 nm. Afin que cette source soit compatible avec un MZI, quelle que soit la variation de la hauteur et de la largeur des guides d'onde, la largeur spectrale $\Delta\lambda$ de cette source devra être très inférieure au FSR minimum du MZI dans cette plage spectrale, typiquement 10 fois inférieure. Cet intervalle spectral 840nm-860nm est pertinent car un grand nombre de laser à faible cout émettant à 850nm sont disponible commercialement et leur longueur d'onde centrale est typiquement précise à $\pm 10$nm.

La figure 3A permet de déterminer que le FSR minimum sur la bande 840nm-860nm vaut 20nm (obtenu pour la courbe 32 correspondant à $W_{nominale}$ et $H_{nominal}$-1 nm). Ainsi, il est nécessaire d'utiliser une source possédant une largeur spectrale $\Delta\lambda$ inférieure ou égale à 2nm avec le capteur interférométrique comprenant le circuit optique intégré de l'invention, pour la hauteur nominale $H_{nominale}$, la largeur nominale $W_{nominale}$ et la longueur de bras précisées.

De même, la figure 3B permet de déterminer que le FSR minimum sur la bande 840nm-860nm vaut 7nm (obtenu pour la courbe 45 correspondant à $H_{nominale}$-10nm et $W_{1,nominale}$). Ainsi, il est nécessaire d'utiliser une source possédant une largeur spectrale inférieure ou égale à 0.7nm avec le capteur interférométrique du mode de réalisation de la figure 1, pour la hauteur nominale $H_{nominale}$, la largeur nominale $W_{nominale}$ et la longueur de bras précisées, ce qui excède déjà les tolérances de certains lasers monomodes bas coût.

L'utilisation d'un circuit optique intégré de l'invention avec un bras de référence encapsulé permet donc de diminuer d'un facteur 3 la contrainte sur la largeur spectrale du rayonnement émis par la source par rapport au rayonnement nécessaire pour le MZI non symétrique.

On observe de plus, que, pour le MZI de l'invention, le FSR varie nettement moins avec la longueur d'onde que le FSR du MZI non symétrique. Ceci implique que l'encapsulation du bras de référence permet d'utiliser une source de rayonnement moins précise quant à sa longueur d'onde centrale d'émission comparativement à celle nécessaire pour un MZI non symétrique. Cela contribue à faciliter l'utilisation du capteur interférométrique comprenant le circuit optique intégré de l'invention.

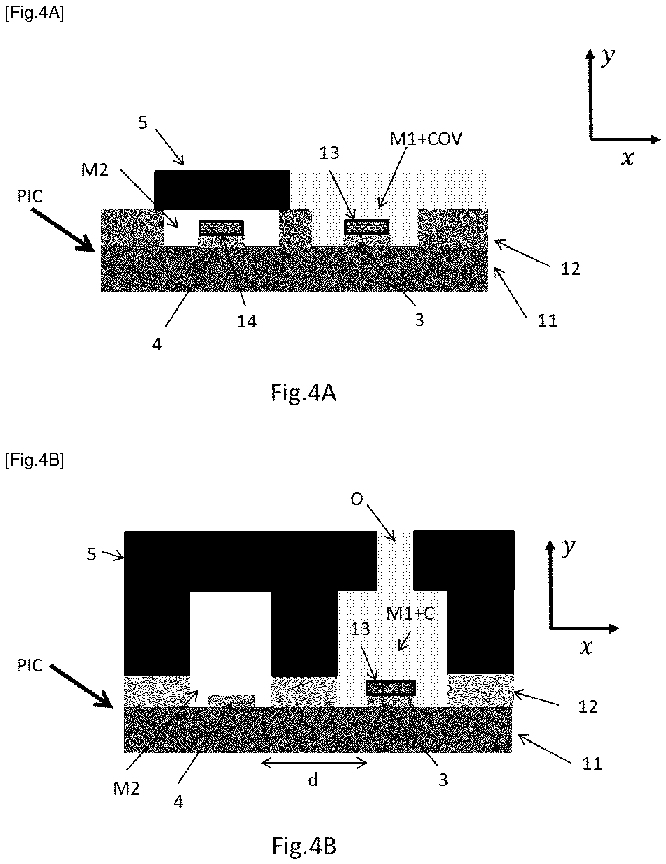

La figure 4A présente une vue de profil d'un mode de réalisation de l'invention, dans lequel le circuit optique intégré comprend une couche de fonctionnalisation 13 recouvrant au moins partiellement le bras sensible 3 et une couche dite de compensation 14 recouvrant au moins partiellement le bras de référence 4. En effet, la couche de fonctionnalisation rajoute une première sur-épaisseur. De plus, étant adaptée pour adsorber un des composés à détecter, une forte concentration de ce composé produira une pseudo-couche à la surface de la couche de fonctionnalisation 13, elle aussi susceptible de rompre la symétrie du MZI de l'invention. Cette couche de compensation permet donc de partiellement compenser la variation d'épaisseur (ou de hauteur) du bras sensible produit par la fonctionnalisation et par l'adsorption de composés à détecter.. Cette couche de compensation, extrêmement stable dans le temps, permet de conserver la symétrie du MZI de l'invention.

La figure 4B présente une présente une vue de profil d'un mode de réalisation de l'invention, dans lequel la couche d'encapsulation 5 est déposée au-dessus du superstrat 12 tout en en recouvrant partiellement le bras sensible 3, ladite couche d'encapsulation 5 comportant une ouverture O au travers de laquelle le milieu M1 et les composés à détecter C peuvent librement circuler. Ainsi le bras de sensible 3 est toujours exposé au milieu M1 et aux composés à détecter C.

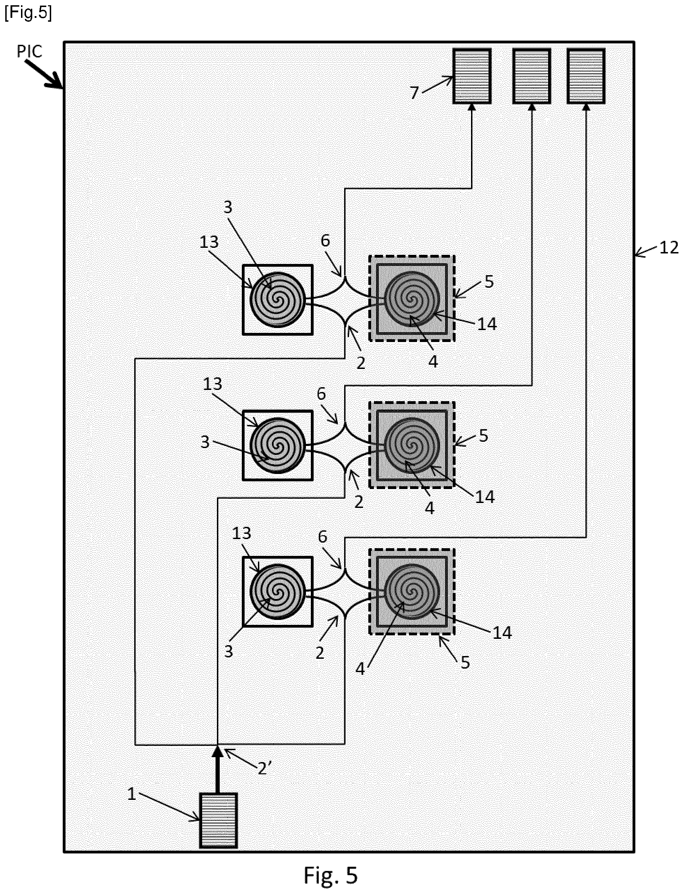

La figure 5 représente une vue du dessus d'un circuit optique intégré PIC selon une première variante de l'invention. Dans cette première variante, le circuit optique intégré PIC comporte en outre au moins un séparateur directionnel additionnel 2' configuré pour séparer le rayonnement lumineux $L_{in}$ couplé par le premier moyen de couplage 1 vers une pluralité d'ensembles interférométriques. Le rayonnement transmis par chaque ensemble interférométrique est dirigé vers un deuxième moyen de couplage 7 différent pour chaque ensemble interférométrique et adapté pour coupler ledit rayonnement transmis vers un milieu extérieur au circuit optique intégré PIC.

A titre d'exemple donné de manière non limitatif, la figure 5 représente un circuit intégré PIC d'un capteur interférométrique comportant trois ensembles interférométriques.

Dans cette première variante, le bras sensible de chaque ensemble interférométrique comprend une couche dite de fonctionnalisation 13 recouvrant au moins partiellement le bras sensible et adaptée pour adsorber un des composés à détecter, chaque couche de fonctionnalisation étant adaptée pour adsorber un composé à détecter différent de ceux adsorbés par les autres couches de fonctionnalisation recouvrant le bras sensible des autres d'ensembles interférométriques. Ces couches de fonctionnalisation, propres à chaque ensemble interférométrique, permettent au capteur de la première variante de l'invention de détecter une pluralité de composer à détecter.

Dans cette première variante de l'invention, l'encapsulation des bras de référence est réalisée à l'échelle individuelle, c'est-à-dire que la couche d'encapsulation de chaque ensemble interférométrique déposée sur le superstrat est séparée de la couche d'encapsulation des autres ensembles interférométriques. Ainsi, il n'y a pas de contact entre les couches d'encapsulation 5 des différents ensembles interférométriques. Afin de ne pas perturber l'écoulement et/ou la diffusion du milieu ambiant M1 sur le bras sensible de chaque ensemble interférométrique, chaque couche d'encapsulation possède une épaisseur inférieure à $500\mu$m. En effet, des couches d'encapsulation trop épaisse pourraient entrainer des perturbations locales de l'écoulement/de la diffusion du milieu ambiant M1 qui pourraient modifier localement son indice de réfraction. Cette modification de l'indice de réfraction provoquerait alors un déphasage entre le rayonnement guidé dans le bras sensible par rapport au rayonnement guidé dans le bras de référence se traduisant par un bruit de mesure sur le déphasage mesuré par le capteur diminuant ainsi la sensibilité de la mesure.

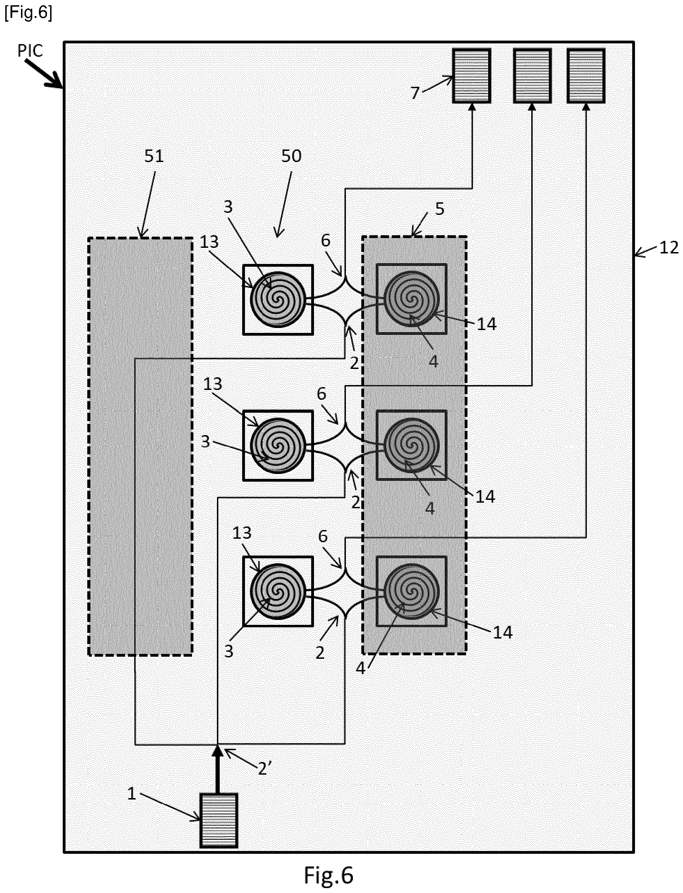

La figure 6 représente une vue du dessus d'un circuit optique intégré PIC d'un capteur interférométrique selon une deuxième variante de l'invention. Cette deuxième variante de l'invention est similaire à la première variante de l'invention illustrée dans la figure 6 à l'exception que la couche d'encapsulation 5 de chaque bras de référence de l'ensemble interférométrique n'est pas séparée de la couche d'encapsulation des autres ensembles interférométriques, de manière à former une couche d'encapsulation sans discontinuité, encapsulant simultanément une pluralité d'ensembles interférométriques. Dans ce mode de réalisation, la couche d'encapsulation scelle des cavités individuelles et discontinues.

En outre, dans un mode de réalisation de la deuxième variante de l'invention également représenté figure 6, le circuit optique intégré PIC comprend une autre couche additionnelle 51, identique à la couche d'encapsulation 5 et déposée de la même manière que cette dernière, au-dessus du superstrat, de manière à définir un canal 50 au sein duquel se trouvent tous les bras sensibles des ensembles interférométriques. Dans ce mode de réalisation de la deuxième variante de l'invention, le milieu ambiant M1 auxquels sont exposés les bras sensibles des ensembles interférométriques est un fluide. Ainsi, la couche d'encapsulation permet de définir un canal de microfluidique 50 dans lequel il est possible de contrôler l'écoulement du milieu ambiant M1.

Afin de définir un canal de microfluidique fonctionnel, l'épaisseur de la couche d'encapsulation et de la couche additionnelle est comprise entre $5\mu m$ et $2000\mu m$.

Il est important de noter que, dans la deuxième variation de l'invention, la couche additionnelle 51 est optionnelle et peut-être omise.

## Revendications

1. Circuit optique intégré (PIC) pour capteur interférométrique (10) comportant:

   - une couche inférieure dite substrat (11) ;
   - un premier moyen de couplage (1) adapté pour coupler un rayonnement lumineux incident ($L_{in}$) au circuit optique intégré (PIC);
   - un séparateur directionnel (2) relié au premier moyen de couplage (1) et configuré pour séparer le rayonnement lumineux ($L_{in}$) couplé par le premier moyen de couplage (1) vers au moins un couple de guides d'onde compris dans le circuit optique intégré, chaque couple de guides d'onde comportant :
   - un premier guide d'onde dit bras sensible (3) dans lequel se propage une première portion du rayonnement lumineux, ledit bras sensible étant exposé à un premier milieu ambiant (M1) et à au moins un composé à détecter (C) induisant une modification de l'indice de réfraction local perçu par la partie évanescente du champ électromagnétique de la première portion du rayonnement lumineux, et
   - un deuxième guide d'onde dit bras de référence (4) dans lequel se propage une deuxième portion du rayonnement lumineux,
   - un combineur directionnel (6) configuré pour combiner la première portion du rayonnement lumineux issue dudit bras de référence, dite première portion transmise, et la deuxième portion du rayonnement lumineux issue dudit bras sensible, dite deuxième portion transmise, pour former un rayonnement transmis ;
   - un deuxième moyen de couplage (7) adapté pour coupler ledit rayonnement transmis vers un milieu extérieur au circuit optique intégré (PIC);
   - une couche supérieure dite superstrat (12) recouvrant au moins le premier (1) et le deuxième (7) moyen de couplage, le séparateur directionnel (2) et le combineur (6) directionnel et ne recouvrant pas le bras sensible (3) et le bras de référence (4), le circuit optique intégré étant **caractérisé par**
   - une couche d'encapsulation (5) encapsulant le bras de référence, ladite couche d'encapsulation étant imperméable au(x) composé(s) à détecter (C), de manière à ce que le bras de référence soit exposé uniquement à un deuxième milieu ambiant (M2), sensiblement de même nature que le premier milieu ambiant (M1) et dépourvu dudit composé à détecter, ladite couche d'encapsulation (5) étant déposée au-dessus du superstrat (12).

2. Circuit optique intégré selon la revendication précédente, dans lequel le bras sensible et le bras de référence sont des guides d'onde en spirale.

3. Circuit optique intégré selon l'une quelconque des revendications précédentes, comprenant une couche dite de fonctionnalisation (13) recouvrant au moins partiellement le bras sensible et adaptée pour adsorber un des composés à détecter.

**4.** Circuit optique intégré selon la revendication précédente, comprenant une couche dite de compensation (14) recouvrant au moins partiellement le bras de référence, une épaisseur de la couche de compensation étant égale ou supérieure à celle de la couche de fonctionnalisation (13) avant adsorption dudit composé à détecter.

**5.** Circuit optique intégré selon l'une quelconque des revendications précédentes, dans lequel la couche d'encapsulation est poreuse au premier milieu ambiant de manière à permettre une régulation du degré hydrométrique ou de la pression osmotique du deuxième milieu ambiant (M2) par rapport au premier milieu ambiant (M1).

**6.** Circuit optique intégré selon l'une quelconque des revendications précédentes, dans lequel la couche d'encapsulation est en verre, ou silicium, polymère ou métal.

**7.** Circuit optique intégré selon l'une quelconque des revendications précédentes, dans lequel la couche d'encapsulation est une membrane déformable.

**8.** Circuit optique intégré selon l'une quelconque des revendications précédentes, dans lequel un ensemble formé par ledit séparateur directionnel, ledit bras de référence, ladite couche d'encapsulation, ledit bras sensible et ledit combineur directionnel est appelé ensemble interférométrique , ledit circuit optique intégré comprenant une pluralité desdits ensembles interférométriques, au moins un séparateur directionnel additionnel (2') configuré pour séparer le rayonnement lumineux couplé par le premier moyen de couplage vers ladite pluralité d'ensembles interférométriques, et une pluralité de deuxièmes moyens de couplage (7), chacun adapté pour coupler le rayonnement transmis par un ensemble interférométrique différent vers un milieu extérieur au circuit optique intégré (PIC).

**9.** Circuit optique intégré selon la revendication précédente, dans lequel le bras sensible de chaque ensemble interférométrique comprend une couche dite de fonctionnalisation (13) recouvrant au moins partiellement le bras sensible et adaptée pour adsorber un des composés à détecter, chaque couche de fonctionnalisation étant adaptée pour adsorber un composé à détecter différent de ceux adsorbés par les autres couches de fonctionnalisation recouvrant le bras sensible des autres d'ensembles interférométriques.

**10.** Circuit optique intégré selon l'une quelconque des revendications 8 ou 9, dans lequel le bras de référence de chaque ensemble interférométrique est encapsulé individuellement.

**11.** Circuit optique intégré selon la revendication précédente, dans lequel l'épaisseur de la couche d'encapsulation individuelle est inférieure à 500 $\mu$m.

**12.** Circuit optique intégré selon l'une quelconque des revendications 8 ou 9, dans lequel les bras de référence des ensembles interférométriques sont encapsulés collectivement, de manière à former une couche d'encapsulation uniforme et sans discontinuité.

**13.** Circuit optique intégré selon la revendication précédente, dans lequel l'épaisseur de la couche d'encapsulation uniforme est comprise entre 5 et 2000 $\mu$m.

**14.** Capteur interférométrique comprenant :

- une source laser configurée pour émettre un rayonnement lumineux ($L_{in}$) incident;
- un circuit optique intégré selon l'une quelconque des revendications précédentes ;
- un système de détection optique (8) adapté pour détecter un rayonnement lumineux ($L_{out}$) issu du deuxième moyen de couplage (7) et générer un signal (S) représentatif de l'évolution au cours du temps de l'intensité lumineuse détectée;
- une unité de traitement (9) dudit signal, adaptée pour déterminer, à partir de l'intensité détectée, l'évolution au cours du temps du déphasage entre la première portion transmise et la deuxième portion transmise.


**Patentansprüche**

**1.** Integrierter optischer Schaltkreis (PIC) für einen interferometrischen Sensor (10), umfassend:

- eine als Substrat (11) bezeichnete untere Schicht;
- ein erstes Kopplungsmittel (1), das dafür geeignet ist, eine einfallende Lichtstrahlung ($L_{in}$) mit dem integrierten

optischen Schaltkreis (PIC) zu koppeln;

- einen richtungsabhängigen Separator (2), der mit dem ersten Kopplungsmittel (1) verbunden und dafür konfiguriert ist, die Lichtstrahlung ($L_{in}$), die durch das erste Kopplungsmittel (1) gekoppelt ist, hin zu mindestens einem Wellenleiterpaar, das in dem integrierten optischen Schaltkreis enthalten ist, zu trennen, wobei jedes Wellenleiterpaar umfasst:

- einen ersten, als empfindlicher Arm (3) bezeichneten Wellenleiter, in dem sich ein erster Abschnitt der Lichtstrahlung ausbreitet, wobei der empfindliche Arm einem ersten umgebenden Medium (M1) und mindestens einer zu erkennenden Zusammensetzung (C) ausgesetzt ist, die eine Modifikation des lokalen Brechungskoeffizienten induziert, der von dem abklingenden Teil des elektromagnetischen Felds des ersten Abschnitts der Lichtstrahlung wahrgenommen wird, und

- einen zweiten, als Referenzarm (4) bezeichneten Wellenleiter, in dem sich ein zweiter Abschnitt der Lichtstrahlung ausbreitet,

- einen richtungsabhängigen Steuerschalter (6), der dafür konfiguriert ist, den ersten Lichtstrahlungsabschnitt, der aus dem Referenzarm austritt und der als erster übertragener Abschnitt bezeichnet wird, und den zweiten Lichtstrahlungsabschnitt, der aus dem empfindlichen Arm austritt und der als zweiter übertragener Abschnitt bezeichnet wird, zu kombinieren, um eine übertragene Strahlung zu bilden;

- ein zweites Kopplungsmittel (7), das dafür geeignet ist, die Strahlung, die zu einem umgebenden Medium übertragen wurde, mit dem integrierten optischen Schaltkreis (PIC) zu koppeln;

- eine als Superstrat (12) bezeichnete obere Schicht, die zumindest das erste (1) und das zweite (7) Kopplungsmittel, den richtungsabhängigen Separator (2) und den richtungsabhängigen Steuerschalter (6) bedeckt und nicht den empfindlichen Arm (3) und den Referenzarm (4) bedeckt,

wobei der integrierte optische Schaltkreis **gekennzeichnet ist durch**

- eine Einkapselungsschicht (5), die den Referenzarm einkapselt, wobei die Einkapselungsschicht gegenüber der zu erkennenden Zusammensetzung / den zu erkennenden Zusammensetzungen (C) undurchlässig ist, derart, dass der Referenzarm nur einem zweiten umgebenden Medium (M2) ausgesetzt ist, das im Wesentlichen der gleichen Art ist wie das erste umgebende Medium (M1) und frei von der zu erkennenden Zusammensetzung ist,

wobei die Einkapselungsschicht (5) oberhalb des Superstrats (12) aufgebracht ist.

2. Integrierter optischer Schaltkreis nach dem vorhergehenden Anspruch, wobei der empfindliche Arm und der Referenzarm spiralförmige Wellenleiter sind.

3. Integrierter optischer Schaltkreis nach einem der vorhergehenden Ansprüche, umfassend eine als Funktionalisierungsschicht (13) bezeichnete Schicht, die den empfindlichen Arm zumindest teilweise bedeckt und dafür geeignet ist, eine der zu erkennenden Zusammensetzungen zu adsorbieren.

4. Integrierter optischer Schaltkreis nach dem vorhergehenden Anspruch, umfassend eine als Ausgleichsschicht (14) bezeichnete Schicht, die den Referenzarm zumindest teilweise bedeckt, wobei eine Dicke der Ausgleichsschicht gleich oder größer als diejenige der Funktionalisierungsschicht (13) vor der Adsorption der zu erkennenden Zusammensetzung ist.

5. Integrierter optischer Schaltkreis nach einem der vorhergehenden Ansprüche, wobei die Einkapselungsschicht gegenüber dem ersten umgebenden Medium derart porös ist, dass eine Regulierung des hydrometrischen Grades oder des osmotischen Drucks des zweiten umgebenden Mediums (M2) in Bezug auf das erste umgebende Medium (M1) möglich ist.

6. Integrierter optischer Schaltkreis nach einem der vorhergehenden Ansprüche, wobei die Einkapselungsschicht aus Glas, Silizium, Polymer oder Metall besteht.

7. Integrierter optischer Schaltkreis nach einem der vorhergehenden Ansprüche, wobei die Einkapselungsschicht eine verformbare Membran ist.

8. Integrierter optischer Schaltkreis nach einem der vorhergehenden Ansprüche, wobei eine aus dem richtungsabhängigen Separator, dem Referenzarm, der Einkapselungsschicht, dem empfindlichen Arm und dem richtungsabhängigen Steuerschalter bestehende Gruppe als interferometrische Gruppe bezeichnet wird, wobei der integrierte optische Schaltkreis eine Vielzahl der interferometrischen Gruppen umfasst, wobei mindestens ein zusätzlicher richtungsabhängiger Separator (2') dafür konfiguriert ist, die Lichtstrahlung, die durch das erste Kopplungsmittel gekoppelt ist, hin zu der Vielzahl von interferometrischen Gruppen zu trennen, und eine Vielzahl von zweiten Kopplungsmitteln (7) umfasst, wobei jedes dafür geeignet ist, die Strahlung, die von einer anderen interferometrischen Gruppe zu einem Medium außerhalb des integrierten optischen Schaltkreises (PIC) zu koppeln.

9. Integrierter optischer Schaltkreis nach dem vorhergehenden Anspruch, wobei der empfindliche Arm von jeder interferometrischen Gruppe eine als Funktionalisierungsschicht (13) bezeichnete Schicht umfasst, die den empfindlichen Arm zumindest teilweise bedeckt und dafür geeignet ist, eine der zu erkennenden Zusammensetzungen zu adsorbieren, wobei jede Funktionalisierungsschicht dafür geeignet ist, eine zu erkennende Zusammensetzung zu adsorbieren, die sich von denjenigen unterscheidet, die von den anderen Funktionalisierungsschichten adsorbiert werden, die den empfindlichen Arm der anderen interferometrischen Gruppen bedecken.

10. Integrierter optischer Schaltkreis nach einem der Ansprüche 8 oder 9, wobei der Referenzarm von jeder interferometrischen Gruppe einzeln eingekapselt ist.

11. Integrierter optischer Schaltkreis nach dem vorhergehenden Anspruch, wobei die Dicke der einzelnen Einkapselungsschicht weniger als 500 $\mu$m beträgt.

12. Integrierter optischer Schaltkreis nach einem der Ansprüche 8 oder 9, wobei die Referenzarme der interferometrischen Gruppen zusammen eingekapselt sind, so dass sie eine einheitliche Einkapselungsschicht ohne Unterbrechung bilden.

13. Integrierter optischer Schaltkreis nach dem vorhergehenden Anspruch, wobei die Dicke der einheitlichen Einkapselungsschicht zwischen 5 und 2000 $\mu$m liegt.

14. Interferometrischer Sensor, umfassend:

- eine Laserquelle, die dafür konfiguriert ist, eine einfallende Lichtstrahlung ($L_{in}$) auszugeben;
- einen integrierten optischen Schaltkreis nach einem der vorhergehenden Ansprüche,
- ein optisches Erkennungssystem (8), das dafür geeignet ist, eine Lichtstrahlung ($L_{out}$), die aus dem zweiten Kopplungsmittel (7) austritt, zu erkennen und ein Signal (S) zu erzeugen, das für den Verlauf der erkannten Lichtintensität im Lauf der Zeit steht;
- eine Signalverarbeitungseinheit (9), die dafür geeignet ist, anhand der erkannten Intensität den Verlauf der Phasendifferenz zwischen dem ersten übertragenen Abschnitt und dem zweiten übertragenen Abschnitt im Lauf der Zeit zu bestimmen.

## Claims

1. Photonic integrated circuit (PIC) for interferometric sensor (10) having:

- a bottom layer called substrate (11);
- a first coupling means (1) suitable for coupling an incident light radiation ($L_{in}$) to the photonic integrated circuit (PIC);
- a directional splitter (2) linked to the first coupling means (1) and configured to split the light radiation ($L_{in}$) coupled by the first coupling means (1) to at least one pair of waveguides comprised in the photonic integrated circuit, each pair of waveguides having:
- a first waveguide called sensitive arm (3) in which a first portion of the light radiation is propagated, said sensitive arm being exposed to a first ambient medium (M1) and to at least one compound to be detected (C) inducing a modification of the local refractive index perceived by the evanescent part of the electromagnetic field of the first portion of the light radiation, and
- a second waveguide called reference arm (4) in which a second portion of the light radiation is propagated,
- a directional combiner (6) configured to combine the first portion of the light radiation from said reference arm, called first transmitted portion, and the second portion of the light radiation from said sensitive arm, called second transmitted portion, to form a transmitted radiation;
- a second coupling means (7) suitable for coupling said transmitted radiation to a medium external to the photonic integrated circuit (PIC);
- a top layer called superstrate (12) covering at least the first (1) and the second (7) coupling means, the directional splitter (2) and the directional combiner (6), and not covering the sensitive arm (3) and the reference arm (4), the photonic integrated circuit being **characterised by**:

- an encapsulation layer (5) encapsulating the reference arm, said encapsulation layer being impermeable to the compound(s) to be detected (C), so that the reference arm is exposed only to a second ambient medium (M2), substantially of the same nature as the first ambient medium (M1) and without said compound to be detected, said encapsulation layer (5) being deposited on top of the superstrate (12).

2. Photonic integrated circuit according to the preceding claim, wherein the sensitive arm and reference arm are spiral-form waveguides.

3. Photonic integrated circuit according to either one of the preceding claims, comprising a so-called functionalisation layer (13) at least partially covering the sensitive arm and suitable for adsorbing one of the compounds to be detected.

4. Photonic integrated circuit according to the preceding claim, comprising a so-called compensation layer (14) at least partially covering the reference arm, a thickness of the compensation layer being equal to or greater than that of the functionalisation layer (13) before adsorption of said compound to be detected.

5. Photonic integrated circuit according to any one of the preceding claims, wherein the encapsulation layer is porous to the first ambient medium so as to allow a regulation of the relative humidity or of the osmotic pressure of the second ambient medium (M2) relative to the first ambient medium (M1).

6. Photonic integrated circuit according to any one of the preceding claims, wherein the encapsulation layer is made of glass, or silicon, polymer or metal.

7. Photonic integrated circuit according to any one of the preceding claims, wherein the encapsulation layer is a deformable membrane.

8. Photonic integrated circuit according to any one of the preceding claims, wherein an assembly formed by said directional splitter, said reference arm, said encapsulation layer, said sensitive arm and said directional combiner is called interferometric assembly, said photonic integrated circuit comprising a plurality of said interferometric assemblies, at least one additional directional splitter (2') configured to split the light radiation coupled by the first coupling means toward said plurality of interferometric assemblies, and a plurality of second coupling means (7), each suitable for coupling the radiation transmitted by a different interferometric assembly to a medium external to the photonic integrated circuit (PIC).

9. Photonic integrated circuit according to the preceding claim, wherein the sensitive arm of each interferometric assembly comprises a so-called functionalisation layer (13) at least partially covering the sensitive arm and suitable for adsorbing one of the components to be detected, each functionalisation layer being suitable for adsorbing a compound to be detected different from those adsorbed by the other functionalization layers covering the sensitive arm of the other interferometric assemblies.

10. Photonic integrated circuit according to any one of claims 8 or 9, wherein the reference arm of each interferometric assembly is individually encapsulated.

11. Photonic integrated circuit according to the preceding claim, wherein the thickness of the individual encapsulation layer is less than 500 $\mu$m.

12. Photonic integrated circuit according to any one of claims 8 or 9, wherein the reference arms of the interferometric assemblies are collectively encapsulated, so as to form an encapsulation layer that is uniform and without discontinuity.

13. Photonic integrated circuit according to the preceding claim, wherein the thickness of the uniform encapsulation layer is between 5 and 2000 $\mu$m.

14. Interferometric sensor comprising:

- a laser source configured to emit an incident light radiation ($L_{in}$);
- a photonic integrated circuit according to any one of the preceding claims;
- an optical detection system (8) suitable for detecting a light radiation ($L_{out}$) from the second coupling means (7) and generating a signal (S) representative of the evolution over time of the detected light intensity;
- a processing unit (9) for processing said signal, suitable for determining, from the detected intensity, the evolution over time of the phase-shift between the first transmitted portion and the second transmitted portion.

[Fig.1A]

Fig. 1A

[Fig.1B]

Fig.1B

[Fig.2A]

Fig.2A

[Fig.2B]

Fig. 2B

[Fig.3A]

Fig.3A

[Fig.3B]

Fig. 3B

[Fig.4A]

Fig.4A

[Fig.4B]

Fig.4B

[Fig.5]

Fig. 5

[Fig.6]

Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4515430 A

- EP 340577 A

**Littérature non-brevet citée dans la description**

- **MELNIK, EVA et al.** Local functionalization of CMOS-compatible Si3N4 Mach-Zehnder interferometers with printable functional polymers. *Sensors and Actuators B: Chemical,* 2016, vol. 236, 1061-1068

- **A. B. GONZÁLEZ-GUERRERO ; S. DANTE ; D. DUVAL ; J. OSMOND ; L. M. LECHUGA.** Advanced photonic biosensors for point-of-care diagnostics. *Procedia Eng.,* 2011, vol. 25, 71-75